(19) Europäisches Patentamt
European Patent Office
Office européen des brevets

(11) EP 1 645 609 A2

(12) # DEMANDE DE BREVET EUROPEEN

(43) Date de publication:
**12.04.2006 Bulletin 2006/15**

(51) Int Cl.:
***C09K 8/473*** *(2006.01)*

(21) Numéro de dépôt: **05291882.8**

(22) Date de dépôt: **12.09.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **29.09.2004 FR 0410329**

(71) Demandeur: **Institut Français du Pétrole**
**92852 Rueil Malmaison Cédex (FR)**

(72) Inventeurs:
- **Lecolier, Eric**
**92370 Chaville (FR)**
- **Audibert, Annie**
**78290 Croissy sur Seine (FR)**
- **Rivereau, Alain**
**92500 Rueil-Malmaison (FR)**

(54) **Coulis de ciment-mousse**

(57) La présente invention concerne une formulation d'un coulis de ciment-mousse comportant en combinaison :

- au moins un liant hydraulique du groupe constitué par les ciments Portland classe G, les ciments Portland classe H, les ciments alumineux dont la teneur en alumine est au moins supérieure à 30 % en masse, les ciments sulfoalumineux, et les plâtres,
- de l'eau dont la teneur est comprise entre 20 % et 60 % en masse par rapport à la masse de liant hydraulique,
- un agent moussant dont la teneur est comprise entre 1 % et 20 % en masse par rapport à la masse du liant hydraulique, l'agent moussant étant un polymère hydrosoluble comportant des maillons hydrophobes, ou un mélange de tel polymère.

EP 1 645 609 A2

## Description

La présente invention concerne le domaine des formulations des coulis de matériaux cimentaires.

Les cimentations de puits pétroliers sont des opérations complexes dont les buts sont multiples : assurer mécaniquement les colonnes de tubes dans la formation géologique, isoler une couche productrice des couches adjacentes, protéger les colonnes contre la corrosion due aux fluides contenus dans les couches traversées. Dans certaines conditions d'exploitation des gisements d'hydrocarbures ou géothermiques, il est primordial de pouvoir disposer de matériaux de cimentation ayant de faibles masses volumiques. En effet, lorsque les formations forées sont fragiles et non consolidées, il est impossible de réaliser les opérations avec un coulis de ciment de masse volumique classique, environ égale à 1900 kg/$m^3$, sous peine de dépasser la pression de fracturation des terrains forés entraînant alors de fortes pertes dans la formation. Ce cas est notamment rencontré pour les cimentations des cuvelages des puits forés en offshore, ou des puits forés dans des champs matures déplétés.

Pour abaisser la masse volumique des coulis de cimentation, il est courant d'augmenter soit la quantité d'eau, soit la quantité de gaz. Lorsqu'il est décidé d'alléger le matériau en augmentant la proportion d'eau, cette proportion d'eau élevée génère une porosité importante ce qui se traduit par des propriétés médiocres de la gaine de ciment en termes de perméabilité, de résistances mécaniques, de fissuration et de durabilité. Lorsque la solution retenue est d'alléger le coulis en utilisant du gaz, deux alternatives se présentent. La première solution consiste à ajouter des billes creuses dans la formulation du matériau de cimentation. Cette technique est illustrée par les documents US 3,804,058 , US 4,252,193 et US 5,019,976. La seconde solution consiste à entraîner volontairement beaucoup de gaz dans le coulis cimentaire pour le faire mousser. Cette technique est illustrée par les documents US 5,806,594 et US 5,484,019. Ce matériau de cimentation est alors nommé « ciment-mousse ». La qualité du ciment-mousse représente la fraction volumique de gaz présente dans le coulis. Pour la cimentation avec du ciment-mousse, on utilise des ciments-mousses avec des qualités n'excédant généralement pas 80%.

Pour la réussite de la cimentation avec du ciment-mousse, il est particulièrement important de s'assurer que l'agent moussant utilisé permet d'obtenir des qualités de mousse compatibles avec la masse volumique recherchée (cette caractéristique est nommée la « moussabilité » du coulis de ciment). De plus, on requiert que la mousse obtenue soit stable (cette caractéristique est nommée la « stabilité » de la mousse). En effet, des mousses de ciment instables vont conduire à la formation d'un matériau cimentaire très irrégulier dont les pores de la structure poreuse sont très connectés, et, par conséquent, très perméable. La stabilité du ciment-mousse est donc primordiale pour obtenir une cimentation de bonne qualité qui répond à toutes les exigences des cimentations des puits pétroliers et gaziers.

Pour obtenir moussabilité et stabilité de la mousse de matériaux cimentaires (pâte de ciment, mortiers ou bétons), on utilise généralement conjointement un agent moussant (ou un mélange d'agents moussants) et des additifs stabilisateurs de mousse. Il est crucial de correctement choisir les agents moussants et les additifs stabilisateurs de mousse. Parmi les critères à prendre en compte, on peut citer : l'efficacité en terme de moussabilité et de stabilisation de la mousse, l'effet sur les résistances mécaniques et la perméabilité.

Les agents moussants couramment utilisés pour faire mousser des coulis cimentaires sont des tensio-actifs anioniques ou un mélange de tensio-actifs. Par exemple, il est connu qu'un mélange de tensio-actifs anioniques et de tensio-actifs non-ioniques est efficace pour obtenir des mousses stables. Les additifs stabilisateurs de mousse peuvent être soit des tensio-actifs, soit des polymères, des alcools à longue chaîne, sous forme liquide ou en particules solides.

L'une des difficultés pour faire mousser un matériau cimentaire réside dans le fait que la solution interstitielle de ces matériaux cimentaires a un pH élevé, souvent compris entre 12 et 13, et des concentrations ioniques élevées, notamment dues à la concentration des ions calcium. Il est connu que les tensio-actifs en tant qu'agents moussants sont peu efficaces à pH basique. Il est également connu que la présence d'ions multivalents, comme par exemple le calcium qui résulte de la dissolution du ciment dans l'eau, a pour effet de précipiter les tensio-actifs anioniques. Dans ce cas, les tensio-actifs ayant précipité ne peuvent plus participer à la formation de la mousse. On comprend que faire mousser un coulis de ciment n'est pas une opération triviale et qu'il n'est pas évident d'obtenir des mousses de bonne qualité stables.

La présente invention propose d'utiliser des polymères hydrosolubles comportant des chaînons hydrophobes pour faire mousser des coulis de ciment en vue d'obtenir des mousses stables et de bonne qualité.

De manière générale, la présente invention concerne un matériau de cimentation comportant :

- au moins un liant hydraulique du groupe constitué par les ciments Portland classe G, les ciments Portland classe H, les ciments alumineux dont la teneur en alumine est au moins supérieure à 30 % en masse, les ciments sulfoalumineux, et les plâtres,
- de l'eau dont la teneur est comprise entre 20 % et 60 % en masse par rapport à la masse de liant hydraulique,
- un agent moussant dont la teneur est comprise entre 0,2 % et 20 % en masse par rapport à la masse du liant hydraulique, l'agent moussant étant un polymère, appelé «polymère associatif », hydrosoluble comportant des motifs hydrophobes.

Selon l'invention, le polymère hydrosoluble peut être un polymère à motifs hydrophiles Hy et à motifs Hb hydrophobes contenant des groupements alkyles, aryles, alkyl-aryle C1 à C30. Ce polymère hydrosoluble peut avoir une masse moléculaire comprise entre $10^4$ et $5x10^6$ daltons et un taux de motifs hydrophobes Hb compris entre 0,5 et 60 %. L'agent moussant peut être un mélange de polymères hydrosolubles comportant des motifs hydrophobes.

Le matériau de cimentation selon l'invention, comporte, en outre, un agent polymère hydrosoluble de fluidification dont la teneur est comprise entre 0,1 % et 8 % en masse par rapport à la masse de liant hydraulique, l'agent polymère hydrosoluble de fluidification étant choisi dans le groupe constitué par : un polynaphtalène sulfonate, un polycarboxylate et un polycarboxylate de polyoxyéthyléne.

La teneur en eau du matériau selon l'invention peut être comprise entre 35 % et 50 % en masse par rapport à la masse du liant hydraulique.

Le matériau de cimentation selon l'invention peut comporter, en outre, un agent retardateur pour contrôler le temps de prise du matériau.

Le matériau de cimentation selon l'invention peut comporter, en outre, un agent accélérateur pour contrôler le temps de prise du matériau.

Le matériau de cimentation selon l'invention peut être utilisé pour cimenter un puits pétrolier.

La présente invention concerne également l'utilisation d'un polymère associatif hydrosoluble comportant des motifs hydrophobes pour faire mousser un coulis de cimentation comportant :

- au moins un liant hydraulique du groupe constitué par les ciments Portland classe G, les ciments Portland classe H, les ciments alumineux dont la teneur en alumine est au moins supérieure à 30 % en masse, les ciments sulfoalumineux, et les plâtres,
- de l'eau dont la teneur est comprise entre 20 % et 60 % en masse par rapport à la masse de liant hydraulique,

la teneur du polymère associatif étant comprise entre 0,2 % et 20 % en masse par rapport à la masse du liant hydraulique.

L'invention propose également un procédé de production d'un coulis de ciment-mousse, dans lequel on effectue les étapes suivantes :

- on mélange un liant hydraulique avec de l'eau de manière à obtenir un coulis de ciment, le liant hydraulique étant choisi dans le groupe constitué par les ciments Portland classe G, les ciments Portland classe H, les ciments alumineux dont la teneur en alumine est au moins supérieure à 30% en masse, les ciments sulfoalumineux, et les plâtres, et la teneur en eau étant comprise entre 0,2 % et 20 % en masse par rapport à la masse du liant hydraulique,
- on introduit un agent moussant dans le coulis de ciment, la teneur en agent moussant étant comprise entre 0,2 % et 20 % en masse par rapport à la masse du liant hydraulique, l'agent moussant étant un polymère hydrosoluble comportant des motifs hydrophobes,
- on pompe le coulis de ciment comportant l'agent moussant, puis
- on injecte un gaz dans le coulis de ciment comportant l'agent moussant et on brasse le mélange de coulis et de gaz de manière à faire mousser le coulis et à obtenir un coulis de ciment-mousse.

Ainsi, les ciments-mousses obtenus à partir des formulations selon la présente invention permettent de réaliser toutes les opérations de cimentation requises dans le cas de puits forés dans des terrains de faible cohésion ou dans lesquels les pressions de fracturation sont faibles. Les ciments-mousses selon l'invention peuvent également être mis en oeuvre pour cimenter des zones caverneuses, faillées et plus généralement dans des zones où surviennent des pertes de fluides lors du forage.

D'autres caractéristiques et avantages de l'invention seront mieux compris et apparaîtront clairement à la lecture de la description faite ci-après en se référant aux figures 1 et 2 présentant des diagrammes comparant des ciments-mousse selon l'invention par rapport à des ciments-mousse classiques et à la figure 3 schématisant un procédé de production d'un coulis de ciment-mousse selon l'invention.

Selon l'invention, on a obtenu des mousses de ciment présentant une bonne « moussabilité » et une bonne « stabilité » en combinant les composants suivants :

- un liant hydraulique du groupe constitué par les ciments Portland

ou d'autres liants hydrauliques (par exemple, du ciment alumineux dont la teneur en alumine est supérieure à 30 % ou du ciment sulfoalumineux ou du plâtre),

- de l'eau en quantité comprise entre 20 % et 60 %, et préférentiellement entre 35 % et 50 %.
- un agent moussant composé de polymères hydrosolubles comportant des motifs hydrophobes, couramment nommés « polymères associatifs », dont la structure chimique est explicitée ci-après,

- éventuellement, un agent accélérateur de prise,
- éventuellement, un agent retardateur de prise,
- éventuellement, un agent superplastifiant encore appelé fluidifiant hydrosoluble en proportion comprise entre 0,1% et 8% en poids par rapport au liant hydraulique (les molécules peuvent être un polynaphtalène sulfonate, un polycarboxylate, ou un polycarboxylate de polyoxyéthylène), et
- éventuellement, un additif stabilisant la mousse.

Les ciments Portland peuvent être du Black Label, du HTS ou du CEMOIL fabriqués respectivement par les sociétés Dyckerhoff, Lafarge et CCB. Les ciments alumineux peuvent être les ciments Secar 51 ou Ternal fabriqués par la société Lafarge Aluminates.

L'agent moussant est un polymère associatif. Il peut être en proportion comprise entre Ccritique minimale et 20 % en masse par rapport à la masse du liant hydraulique. Ccritique minimale est une concentration minimale en dessous de laquelle il n'est pas possible d'obtenir de la mousse stable. Cette concentration critique minimale est spécifique à la molécule choisie. En générale, Ccritique est supérieure à 0,2 %, de préférence à 0,5 % ou 1 %, et parfois à 2 %, en masse par rapport à la masse du liant hydraulique.

Les polymères associatifs utilisés dans la composition du coulis de ciment selon l'invention peuvent être un polymère à motifs hydrophiles (Hy) et hydrophobes (Hb) en solution aqueuse, les motifs hydrophobes (Hb) contenant des groupement alkyles, aryles, alkyl-aryle C1 à C30, le polymère ayant la structure suivante : —(Hb)—(Hy)— avec une répartition statistique avec :

- Hy est de la forme :

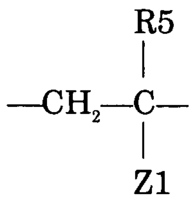

où R5 est H ou CH3, et Z1 est COOH ou $CONH_2$ ou $CONHR1SO^{3-}$ ou CONHR"1, R"1 est $CH_3$ ;
ou de la forme :

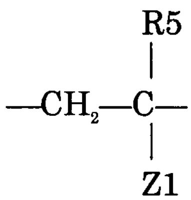

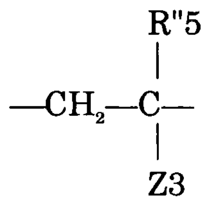

où R5 est H ou $CH_3$, et Z1 est $CONH_2$ ou CONHR"1, R"1 est $CH_3$ et où R"5 est H ou $CH_3$, et Z3 est COOH ou $CONHR1SO^{3-}$ où R1 est $C_3H_8$, ou $C_6H_5$ ;

- Hb est de la forme

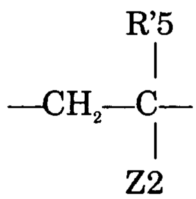

où R'5 est H ou $CH_3$ et Z2 est COOR7, COOR'1, CONR1R'1 ou CONR1R7, R7 étant un tensioactif non ionique constitué d'une chaîne polyoxyéthylènique d'alkyle, R1 est H ou un radical alkyle, aryle ou alkyl-aryle de C1-C30, et R'1 est un radical alkyle, aryle ou alkyl-aryle de C1-C30.

En particulier, le polymère peut avoir une masse moléculaire comprise entre $10^4$ et $5x10^6$ daltons, et plus spécialement entre $10^4$ et $1,5x10^6$, et un taux de motifs hydrophobes Hb compris entre 0,5 et 60%.

Selon la présente invention, le polymère associatif peut également être un dérivé du galactomanane modifié hydrophyliquement et hydrophobiquement tels que décrits dans le brevet US-A-4,960,876. Ce polymère associatif est notamment produit par la société LAMBERTI et commercialisé sous les références HPG19, HPG21, HM21, HM22. La masse moléculaire du galactomanane modifié peut être inférieure à $5 \times 10^6$ daltons, préférentiellement inférieure à $2 \times 10^6$ daltons. Le groupement hydrophobe peut être un radical alkyl linéaire ou ramifié, saturé ou avec insaturation éthylénique comprenant entre 10 et 32 atomes de carbone, préférentiellement entre 12 et 30. L'addition au coulis de ciment d'une quantité de dérivé de galactomanane modifié hydrophyliquement et hydrophobiquement ou d'une quantité d'un mélange de polymères hydrosolubles modifiés hydrophobiquement tels que décrits précédemment et de dérivés de galactomanane modifiés hydrophyliquement et hydrophobiquement permet d'obtenir des mousses de ciment de masses volumiques différentes et inférieures à la masse volumique initiale du coulis de ciment.

Le polymère associatif peut être choisi dans le groupe constitué par :

- HMPAM1 : où R5 est H et Z1 est $CONH_2$, R'5=$CH_3$, Z2 est COOR'1 avec R'1=$C_9H_{19}$,
- HMPAM2: où R5 est H et Z1 est $CONH_2$, R'5=H, Z2 est CONR'1R'1 avec R'1=$C_6H_{13}$,
- HMPAM3: où R5 est H et Z1 est CONH2, R"5=H, Z3 est COOH ou $CONHR1SO_3$, où R1 est $C_3H_8$ (AMPS), R'5=H, Z2 est CONR'1R'1 avec R'1=$C_6H_{13,}$
- S1: où R5 est H et Z1 est $CONH_2$, R'5=H et Z2 est $C_6H_4SO_3H$,
- HB1 : où R5 est H, Z1 est COOH, R'5 est H et Z2 est COOR'1 avec R'1=$C_4H_9$.

En particulier, le polymère dénommé HMPAM1, ou HMPAM2, ou HMPAM3, peut avoir une masse moléculaire comprise entre $5x10^5$ et $2x10^6$ daltons et un taux d'hydrophobe (Hb) compris entre 0,5 et 3%.

Le polymère S1, copolymère acrylamide (Hy)/styrène sulfonate (Hb) ramifié ou non, selon la description ci-dessus peut avoir un rapport molaire d'environ 50/50 et une masse molaire comprise entre $5x10^5$ et $5x10^6$ daltons. Dans le cas où il est ramifié, il sera dénommé S2. Le ramifiant utilisé dans ce cas peut être le N, N' méthylène bis acrylamide MBA.

Le polymère HB1, copolymère acrylate (Hy)/butyl acrylate (Hb), avec R5 est H, Z1 est COOH, R'5 est H et Z2 est COOR'1 avec R'1 en C4, peut comprendre entre 50% et 80% de motifs acrylates, et avoir une masse moléculaire comprise entre $10^4$ et $5 \times 10^6$, et de préférence entre $10^4$ et $5 \times 10^4$ daltons.

L'agent moussant peut être un mélange de différents polymères associatifs.

Le coulis de ciment selon l'invention est très fluide. En l'occurrence il peut y avoir absence de seuil d'écoulement, c'est-à-dire que le ciment s'écoule sous le seul effet de la force de gravité. Cette fluidité peut être la cause d'un manque de stabilité de la mousse de ciment. Le polymère associatif permet d'améliorer la stabilité de la mousse. Ce polymère associatif permet d'augmenter la viscosité du coulis, ce qui a pour effet de limiter la coalescence des bulles de gaz.

En outre, la formulation du matériau de cimentation selon l'invention peut comporter un agent retardateur qui permet de retarder le temps de prise du coulis de ciment.

Les agents retardateurs peuvent être des produits organiques, ou des matières minérales solubles dans l'eau.

Parmi les produits organiques, on distingue les molécules suivantes :

- les lignosulfonates (de calcium, de sodium) dont les teneurs en sucres sont inférieures à 20%,
- les acides et sels (sodium, potassium, calcium) d'acides hydroxycarboxyliques,
- les acides oxalique et gluconique qui sont efficaces à très faibles dosages,
- le gluconate de sodium de formule $CH_2OH(CHOH)_4COONa$ est très actif pour retarder des matériaux contenant des liants hydrauliques,
- le gluconate de calcium,
- les hydrates de carbone de formule générale $C_n(H_2O)_n$ ; parmi ces molécules, le saccharose de formule $C_{12}H_{22}O_{11}$ est très efficace ; on peut également utiliser les glucoses ($C_6H_{12}O_6$), l'amidon $(C_6H_{10}O_5)_n$ ainsi que la cellulose,
- le sirop de maïs

Ces produits organiques peuvent être utilisés à des dosages compris entre 0,1 % et 5 % en masse d'extrait sec par rapport à la masse de liant hydraulique.

Parmi les agents retardateurs à base de sels minéraux, on peut utiliser les produits suivants :

- les composés du bore utilisés à très faibles dosages peuvent être utilisés pour retarder les matériaux cimentaires ; on peut privilégier l'acide borique ($BO_3H_3$), le borax ($Na_2B_4O_710H_2O$), le métaborate de sodium $Na_2B_2O_4$, le tétraborate de sodium ($Na_2B_4O_7$),
- le sulfate d'étain ($S_2SO_4$)
- l'acétate de plomb ($Pb(C_2H_3O_2)_2$)

- le monophosphate de calcium ($Ca(H_2PO_4)_2$)

Ces agents retardateurs à base de sels minéraux peuvent être utilisés à des dosages compris entre 0,1 % et 2 % en masse par rapport à la masse de liant hydraulique.
En outre, la formulation du matériau de cimentation selon l'invention peut comporter un agent accélérateur qui permet d'accélérer le temps de prise du coulis de ciment. Cet agent accélérateur peut être utilisé pour cimenter des zones à faible température comprise entre -4°C et 10°C. Par exemple, les zones proches du fond marin pour les forages en mer profonde peuvent être à des températures d'environ 4°C.
Les agents accélérateurs peuvent être choisis parmi les produits suivants :

- le chlorure de calcium ($CaCl_2$),
- le nitrite de calcium ($Ca(NO_2)_2$),
- le formiate de calcium ($Ca(HCO_2)_2$).

Ces produits peuvent être utilisés à des concentrations comprises entre 0,5% et 5% en masse par rapport à la masse de liant hydraulique. Pour des températures inférieures à 15°C, le chlorure de calcium ne doit pas être utilisé à des concentrations supérieures à 2,5% par rapport à la masse de ciment. Au-delà de cette concentration, il se comporte comme un retardateur de prise à faibles températures.
On peut également utiliser des agents accélérateurs non chlorés disponibles sur le marché.
Pour montrer l'efficacité des polymères associatifs dans l'obtention d'une mousse de liants hydrauliques, nous avons réalisé des tests en faisant mousser des solutions salines basiques dont la composition est identique à celle de la solution interstitielle des ciments Portland. Ces solutions salines basiques ont été obtenues en filtrant un coulis de ciment et en récupérant le filtrat.
De manière générale, une mousse peut être caractérisée par les deux caractéristiques suivantes : la qualité Q et la vitesse de drainage Vd.

La qualité Q représente la fraction volumique de gaz dans la mousse et s'exprime par $Q = \frac{V_{mousse} - V_0}{V_{mousse}}$ où $V_0$ et $V_{mousse}$ représentent respectivement le volume initial de la solution non moussée et le volume de la solution mousse obtenue à partir de la solution initiale.
La vitesse de drainage représente la vitesse du phénomène de séparation entre la mousse et une phase liquide qui se retrouve dans le fond de l'échantillon. Cette grandeur permet de quantifier la stabilité de la mousse produite. Bikerman a modélisé de manière empirique la vitesse de drainage en supposant que le drainage était un phénomène cinétique du premier ordre.

L'équation s'écrit donc : $V(t) = V_0\left(1 - e^{-kt}\right)$ où V(t) est le volume de liquide drainé, $V_0$ le volume total de la solution qui a moussé, t le temps et k une constante caractéristique de la stabilité de la mousse.
En pratique, on détermine plus souvent la vitesse de drainage $V_d$ du liquide de la mousse en posant par définition : $V_d = \left[\frac{dV(t)}{dt}\right]_{t_{1/2}}$ où $t_{1/2}$ correspond au temps au bout duquel la moitié du liquide initialement contenu dans la mousse a drainé ($V(t_{1/2}) = V0/2$). On a alors la relation suivante : $Vd = k \times V0/2$.
Nous comparons les résultats obtenus, d'une part, avec le polymère associatif HB1 et, d'autre part, les résultats obtenus avec le dodécyl sulfate de sodium, couramment nommé SDS, qui est connu comme étant l'un des meilleurs tensio-actifs moussants. Les résultats des expériences sont consignés dans les graphiques des figures 1 et 2, où les carrés indiquent les valeurs obtenues pour les solutions moussées avec du SDS et les cercles indiquent les valeurs obtenues pour les solutions moussées avec du HB1.
La figure 1 montre la variation de la qualité Q (exprimée en pourcentage) de la mousse obtenue à partir d'une solution interstitielle contenant soit du SDS soit du HB1. La qualité Q est exprimée en fonction de la concentration C (en pourcentage) du polymère associatif contenu dans la solution.
En dessous de la concentration critique minimale de HB1, la solution ne mousse pas. Pour cette expérience, la concentration critique est de 2%. On remarque que le HB1 permet d'obtenir des qualités de mousse équivalentes à celles que l'on peut avoir avec le SDS.
La figure 2 montre la variation de la vitesse de drainage Vd (en ml/min) de la mousse en fonction de la concentration C (en pourcentage) en SDS ou en HB1. On remarque que plus la concentration en HB1 augmente moins la vitesse de drainage est importante : ceci constitue un avantage de l'invention car il possible d'atteindre des très faibles

vitesses de drainage ce qui signifie que les mousses obtenues sont très stables. Alors que pour le SDS, nous voyons le comportement opposé : la vitesse de drainage augmente avec la concentration en tensio-actif. On observe que pour des concentrations supérieures à 5%, le HB1 permet de formuler des mousses avec des vitesses de drainage inférieures à celles des mousses obtenues avec le SDS.

Les exemples ci-dessous indiquent les densités mesurées sur des échantillons de ciment-mousse ayant un rapport de la quantité d'eau par rapport au ciment E/C = 0,44 avec différentes concentrations d'agents moussants. Le ciment Portland classe G a été utilisé pour réaliser les échantillons.

Exemples de densités de ciment-mousse avec différentes concentrations (pourcentage massique de HB1 par rapport au liant hydraulique) en HB1 :

| Concentration en HB1 (en %) | Densité du ciment-mousse (en g/$cm^3$) | Résistance à la compression (en MPa) |
|---|---|---|
| 1 | Mousse Instable | - |
| 2 | Mousse Instable | - |
| 3 | 0,9 | 2,54 |

Exemple de densité de ciment-mousse obtenus à partir du HPG 19 :
Pourcentage massique de HPG 19 = 0,22%
Densité du ciment-mousse = 1,86 g/$cm^3$
Résistance à la compression = 21,1 MPa

Exemple de densité de ciment-mousse obtenus à partir du HPG 21 :
Pourcentage massique de HPG 21 = 0,22%
Densité du ciment-mousse = 1,81 g/cm3
Résistance à la compression = 21,7 MPa

Exemples de densités de ciment-mousse obtenus à partir de mélanges des polymères modifiés hydrophobes HM 21 et HB1 :

| Concentration en HM 21 (en %) | Concentration en HB1 (en %) | Densité du ciment-mousse (en g/$cm^3$) | Résistance à la compression (en MPa) |
|---|---|---|---|
| 0,22 | 0,5 | 1,73 | - |
| 0,22 | 1,0 | 1,11 | 14 |
| 0,22 | 4,0 | 0,83 | - |

Exemples de densités de ciment-mousse obtenus à partir de mélanges des polymères modifiés hydrophobes HM 22 et HB1 :

| Concentration en HM 21 (en %) | Concentration en HB1 (en %) | Densité du ciment-mousse (en g/$cm^3$) | Résistance à la compression (en MPa) |
|---|---|---|---|
| 0,25 | 0 | 1,49 | - |
| 0,21 | 1,0 | 1,84 | 18 |

La figure 3 schématise un procédé de production d'un coulis de ciment-mousse selon l'invention.

Le malaxeur 7 permet de mélanger du liant hydraulique arrivant du silo 1 par le conduit 5 avec de l'eau provenant du réservoir 2 par le conduit 6. L'eau peut éventuellement contenir des agents fluidifiants. Les vannes 3 et 4 permettent de contrôler et d'ajuster les quantités d'eau et de liant hydraulique introduites dans le malaxeur 7. En sortie du malaxeur 7, on obtient un coulis de ciment homogène qui s'écoule dans le conduit 8.

Le réservoir 9 contient des agents moussants : des solutions aqueuses de polymères hydrosolubles comportant des maillons hydrophobes, ou des mélanges de tels polymères. On injecte des agents moussants au moyen de la pompe 10, de la vanne 11 et du conduit 12 dans le coulis de ciment circulant dans le conduit 8.

Le coulis de ciment comportant des agents moussants est pompé par la pompe à laitier 13 jusqu'à une haute pression par exemple comprise entre 10 et 100 bar.

Puis on injecte par le conduit 14 un gaz dans le coulis à haute pression. Le gaz peut être de l'air ou de l'azote. L'injection d'air dans le coulis de ciment est réalisée dans le générateur de mousse 15 qui a pour fonction de brasser

le coulis et le gaz de manière à faire mousser le coulis de ciment. Le générateur de mousse 15 peut créer des turbulences dans le coulis par différentes manières bien connues de l'homme du métier. On obtient en sortie du générateur de mousse 15 un coulis de ciment-mousse qui est évacué par le conduit 16.

Le coulis de ciment-mousse est soit dirigé dans un bac par le conduit 17 soit introduit dans un puits à cimenter par le conduit 18.

Les densimètres 19 et 20, ainsi que les capteurs de pression 21 et 22 permettent de contrôler la densité et la pression du coulis avant et après moussage.

## Revendications

1. Matériau de cimentation comportant :

   - au moins un liant hydraulique du groupe constitué par les ciments Portland classe G, les ciments Portland classe H, les ciments alumineux dont la teneur en alumine est au moins supérieure à 30 % en masse, les ciments sulfoalumineux, et les plâtres,
   - de l'eau dont la teneur est comprise entre 20 % et 60 % en masse par rapport à la masse de liant hydraulique,
   - un agent moussant dont la teneur est comprise entre 0,2 % et 20 % en masse par rapport à la masse du liant hydraulique, l'agent moussant étant un polymère hydrosoluble comportant des motifs hydrophobes.

2. Matériau selon la revendication 1, dans lequel le polymère hydrosoluble est un polymère à motifs hydrophiles Hy et à motifs Hb hydrophobes contenant des groupements alkyles, aryles, alkyl-aryle C1 à C30.

3. Matériau selon la revendication 2, dans lequel le polymère hydrosoluble a une masse moléculaire comprise entre $10^4$ et $5x10^6$ daltons et un taux de motifs hydrophobes Hb compris entre 0,5 et 60 %.

4. Matériau selon l'une des revendications précédentes, dans lequel l'agent moussant est un mélange de polymères hydrosolubles comportant des motifs hydrophobes.

5. Matériau selon l'une des revendications précédentes, comportant, en outre, un agent polymère hydrosoluble de fluidification dont la teneur est comprise entre 0,1 % et 8 % en masse par rapport à la masse de liant hydraulique, l'agent polymère hydrosoluble de fluidification étant choisi dans le groupe constitué par : un polynaphtalène sulfonate, un polycarboxylate et un polycarboxylate de polyoxyéthylène.

6. Matériau selon l'une des revendications précédentes, dans lequel la teneur en eau est comprise entre 35 % et 50 % en masse par rapport à la masse du liant hydraulique.

7. Matériau selon l'une des revendications précédentes, comportant en outre un agent retardateur pour contrôler le temps de prise du coulis.

8. Matériau selon l'une des revendications précédentes, comportant en outre un agent accélérateur pour contrôler le temps de prise du coulis.

9. Matériau selon l'une des revendications précédentes, utilisé pour cimenter un puits pétrolier.

10. Utilisation d'un polymère associatif hydrosoluble comportant des motifs hydrophobes pour faire mousser un coulis de cimentation comportant :

    - au moins un liant hydraulique du groupe constitué par les ciments Portland classe G, les ciments Portland classe H, les ciments alumineux dont la teneur en alumine est au moins supérieure à 30 % en masse, les ciments sulfoalumineux, et les plâtres,
    - de l'eau dont la teneur est comprise entre 20 % et 60 % en masse par rapport à la masse de liant hydraulique,

    la teneur du polymère associatif étant comprise entre 0,2 % et 20 % en masse par rapport à la masse du liant hydraulique.

11. Procédé de production d'un coulis de ciment-mousse, dans lequel on effectue les étapes suivantes :

- on mélange un liant hydraulique avec de l'eau de manière à obtenir un coulis de ciment, le liant hydraulique étant choisi dans le groupe constitué par les ciments Portland classe G, les ciments Portland classe H, les ciments alumineux dont la teneur en alumine est au moins supérieure à 30 % en masse, les ciments sulfoalumineux, et les plâtres, et la teneur en eau étant comprise entre 0,2 % et 20 % en masse par rapport à la masse du liant hydraulique,
- on introduit un agent moussant dans le coulis de ciment, la teneur en agent moussant étant comprise entre 0,2 % et 20 % en masse par rapport à la masse du liant hydraulique, l'agent moussant étant un polymère hydrosoluble comportant des motifs hydrophobes,
- on pompe le coulis de ciment comportant l'agent moussant, puis
- on injecte un gaz dans le coulis de ciment comportant l'agent moussant et on brasse le mélange de coulis et de gaz de manière à faire mousser le coulis et à obtenir un coulis de ciment-mousse

**12.** Procédé selon la revendication 11, dans lequel le polymère hydrosoluble est un polymère à motifs Hy et à motifs Hb hydrophobes contenant des groupements alkyles, aryles, alkyl-aryle C1 à C30.

**13.** Procédé selon la revendication 12, dans lequel le polymère hydrosoluble a une masse moléculaire comprise entre $10^4$ et $5 \times 10^6$ daltons et un taux de motifs hydrophobes Hb compris entre 0,5 et 60 %.

**14.** Procédé selon l'une des revendications 11 à 13, dans lequel l'agent moussant est un mélange de polymères hydrosolubles comportant des motifs hydrophobes.

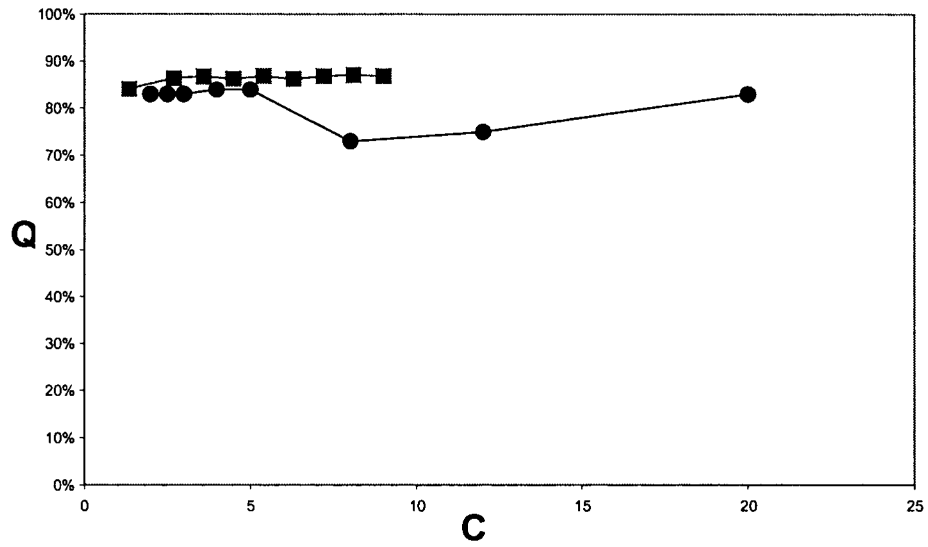
Q
100%
90%
80%
70%
60%
50%
40%
30%
20%
10%
0%
0
5
10
15
20
25
C

FIG.1

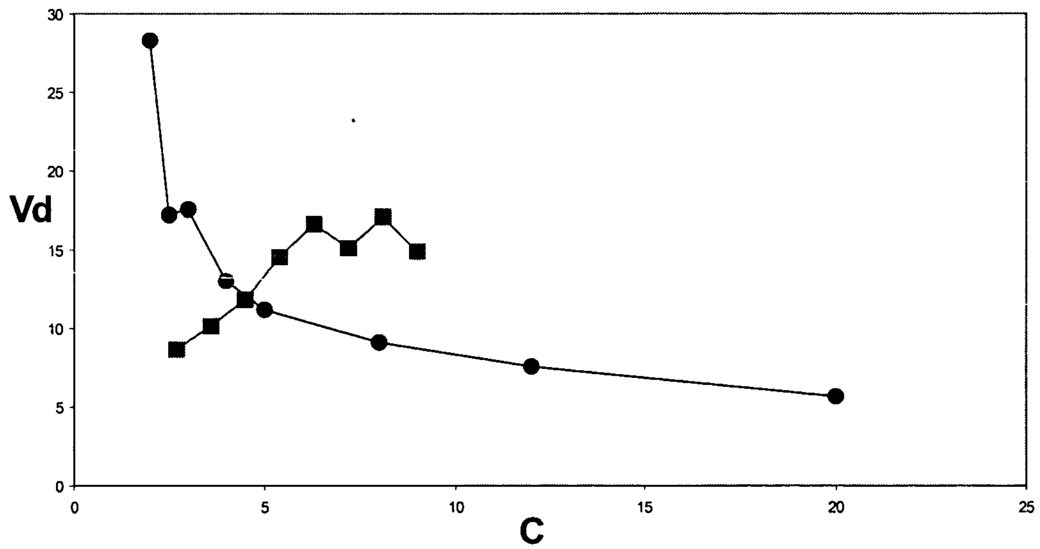
Vd
30
25
20
15
10
5
0
0
5
10
15
20
25
C

FIG.2

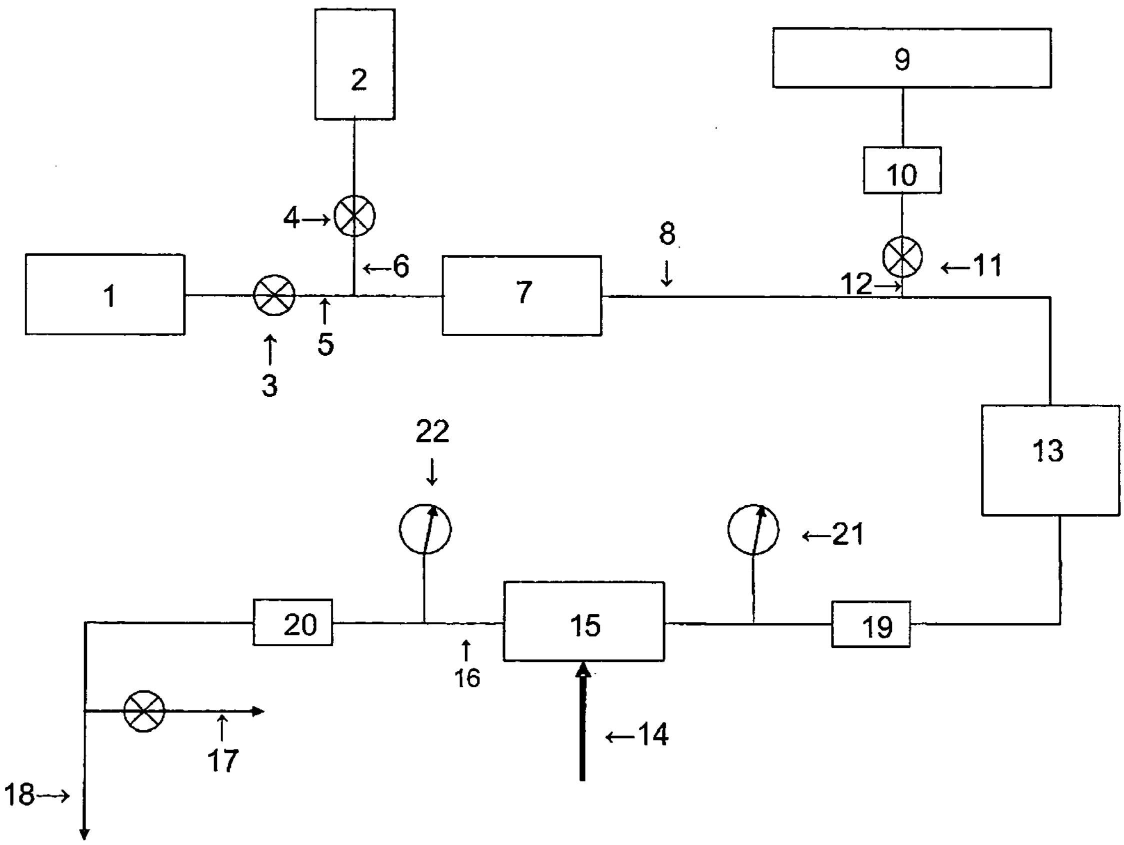


FIG.3